# EUROPÄISCHE PATENTSCHRIFT

(11) **EP 2 275 676 B1**
(45) Veröffentlichungstag und Bekanntmachung des Hinweises auf die Patenterteilung: **12.09.2018**
(21) Anmeldenummer: 10183766.4
(22) Anmeldetag: 19.04.2004
(51) Int. Cl.: F03D 7/02, F03D 9/11, H02J 11/00, F03D 7/04

(54) **Schwarzstartfähiger Windpark**
Black start capable wind park
Parc d'éoliennes avec capacité de redémarrage à froid

(30) Priorität: 05.05.2003 DE 10320087; 26.06.2003 DE 10328889
(43) Veröffentlichungstag der Anmeldung: 19.01.2011
(62) Teilanmeldung aus: 04728181.1
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- WO-A1-02/05406
- DE-A1- 3 724 183
- DE-B1- 2 742 559
- JP-A- 9 060 575
- JP-A- 10 159 706
- US-A- 2 086 279
- US-B1- 6 379 115
- US-B1- 6 420 796

## Beschreibung

Die vorliegende Erfindung betrifft ein Verfahren zum Betreiben eines Windparks mit einer Mehrzahl von Windenergieanlagen. Weiterhin betrifft die Erfindung eine Windenergieanlage mit einem elektrisch erregten Generator und einen Windpark mit einer zentralen Vorrichtung zur Steuerung des Parks.

Der Begriff "Windpark" wird hier im Sinne einer Mehrzahl von Windenergieanlagen verwendet, die an einen gemeinsamen Netzanschlusspunkt angeschlossen sind, ungeachtet der räumlichen Anordnung der einzelnen Windenergieanlagen zueinander. D. h. auch mehrere räumlich voneinander getrennte Gruppen von Windenergieanlagen werden als ein Windpark aufgefasst, wenn sie z. B. über ein gemeinsames Umspannwerk an einen Netzanschlusspunkt angeschlossen sind.

Windparks sind seit einiger Zeit im Stand der Technik bekannt. In solchen Windparks wird in größerem Umfang, als dies bei Einzelanlagen möglich ist, die kinetische Energie des Windes in elektrische Energie umgewandelt. Voraussetzung dafür ist aber natürlich, dass ein ausreichender Wind weht.

Da der Wind aber nicht ununterbrochen weht, kann die windstille Zeit genutzt werden, um Betriebsabläufe wie das Entdrillen von Kabel oder ähnliches auszuführen. Da die Windenergieanlagen jedoch während windstiller Zeiten keine elektrische Energie erzeugen, entnehmen sie die für die Ausführung der Betriebsabläufe erforderliche Energie aus dem Netz. Allerdings gibt es mit dem Netzbetreiber vereinbarte Grenzwerte für den Energiebezug aus dem Netz. Dabei ist die aus dem Netz bezogene Energie bereits vergleichsweise teuer, der die vereinbarte Höchstgrenze überschreitende Anteil wird allerdings vom Netzbetreiber noch teurer abgerechnet. Entsprechend entstehen abhängig von der aus dem Netz bezogenen Energiemenge für den Windparkbetreiber zusätzliche Kosten, die den Ertrag des Windparks schmälern.

Das Dokument DE 2742559 betrifft einen Windenergiekonverter mit einer Hilfsturbine. Gemäß einer Ausführungsform wird vorgeschlagen, eine Energieerzeugung vorzusehen, bei der mit einer Einrichtung zur Erzeugung der Energie von der Hilfsturbine ein Energiespeicher aufgeladen wird, von dem aus dann erforderliche Einrichtungen in Betrieb gesetzt werden.

Als Stand der Technik werden die Dokumente US 6,420,796, US 2,086,279.DE 3724183, WO 02/05406 und US 6,379,115 genannt. Ferner wird auf das Dokument JP 9-60575 hingewiesen, in welchem ein bekannter Windparkaufbau offenbart ist.

Aufgabe der vorliegenden Erfindung ist es daher, ein Verfahren zum Betreiben eines Windparks mit einer Mehrzahl von Windenergieanlagen, eine Windenergieanlage mit einem elektrisch erregten Generator und einen Windpark mit einer zentralen Vorrichtung zur Steuerung des Parks anzugeben, bei welchen das Ausführen von Betriebsabläufen mit begrenztem bzw. verringertem Leistungsbezug aus dem Netz (Bezugsleistung) erfolgt.

Diese Aufgabe wird mit einem schwarzstartfähigen Windpark mit den Merkmalen nach Anspruch 1 gelöst. Mit einem solchen Windpark wird erreicht, dass das Ausführen von Betriebsabläufen des Windparks mit einem begrenzten bzw. verringerten Leistungsbezug aus Netz (Bezugsleistung) erfolgt.

Sobald eine Windenergieanlage des Windparks selbst elektrische Energie erzeugt, wird diese Energie zum Anfahren weiterer Anlagen verwendet, die dann wiederum elektrische Energie erzeugen, welche dann erneut zum Anfahren weiterer Anlagen verwendet wird. Durch diese zeitliche Staffelung muss zum Anfahren eines Windparks nur die zum Anfahren der ersten Anlage erforderliche Leistung aus dem Netz bezogen werden, während die übrigen Anlagen des Windparks dann mit der bereits im Park erzeugten Leistung angefahren werden können. Dadurch kann zwar die im Windpark erzeugte Leistung nicht in das Netz abgegeben werden, aber dafür muss auch keine teurere Leistung aus dem Netz bezogen werden.

Gemäß einer Weiterbildung ist die für die Betriebsabläufe verwendete Leistung auf einen vorgebbaren Anteil an der im Windpark erzeugten Leistung begrenzt. Dadurch kann einerseits der Windpark angefahren werden und andererseits steht elektrische Leistung zur Verfügung, die in das Netz abgegeben werden kann. Somit kann ein schwaches Netz auch während des Anfahrens eines Windparks bereits gestützt werden, statt dem Netz noch Leistung zum Anfahren des Windparks zu entziehen.

Insbesondere bevorzugt ist das Verfahren so ausgebildet, dass die Windenergieanlagen mit dem geringsten Energiebedarf für einen vorgegebenen Betriebsablauf diesen bevorzugt ausführen. Hier ist je nach auszuführendem Betriebsablauf zu unterscheiden. Ist der auszuführende Betriebsablauf z. B. das Entdrillen von Kabeln, wird dieser Ablauf gemäß dieser bevorzugten Ausführungsform zunächst von den Windenergieanlagen ausgeführt, bei denen die geringste Verdrillung aufgetreten ist. Entsprechend schnell können diese Anlagen den Ablauf ausführen und stehen sodann wieder zur Erzeugung elektrischer Energie zur Verfügung. Ebenso wird die Windrichtungsnachführung zunächst bevorzugt bei den Anlagen ausgeführt, bei denen der kleinste Gierwinkel aufgetreten ist.

Bei dem Betriebsablauf des Anfahrens von Windenergieanlagen können unterschiedliche Aspekte berücksichtigt werden. Ein Aspekt ist z. B., die jeweils am weitesten luvseitig, also in Windrichtung stehenden Anlagen zuerst anzufahren, da diese nicht von anderen Anlagen abgeschirmt werden und daher dem Wind die meiste Energie entziehen können. Ein anderer Aspekt betrifft die höchste Leistungsausbeute bei vorgegebener Windgeschwindigkeit. Hier kann also die Leistungskennlinie einer Windenergieanlage berücksichtigt werden, so dass mit dem zur Verfügung stehenden Windangebot der maximal mögliche Betrag elektrischer Leistung erzeugt werden kann. Natürlich sind auch Kombinationen solcher Merkmale möglich, z. B. eine Berücksichtigung des geringsten Gierwinkels und der höchsten elektrischen Leistung.

Um auch einen Windpark schwarzstartfähig zu machen, kann dieser eine permanent erregte Windenergieanlage mit motorloser Windrichtungsnachführung umfassen. Schwarzstartfähigkeit bezeichnet hier die Fähigkeit, einen Windpark anfahren zu können, obwohl aus dem Netz, z. B. in Folge eines Netzausfalls, keine Energie bezogen werden kann. Mit Hilfe der permanent erregten Windenergieanlage kann also zunächst wenigstens eine Windenergieanlage angefahren werden, die entsprechend dem beanspruchten Verfahren elektrische Energie erzeugt, welche sodann zum Anfahren weiterer Windenergieanlagen verwendet wird. Dabei ist auf jeden Fall elektrische Energie erforderlich, um die Steuerung der anzufahrenden Windenergieanlage(n) zu versorgen, auch wenn der Pitchwinkel und die Azimutposition zum Anfahren der Windenergieanlage(n) ausreichen und die Remanenz des Generators für die Erregung ausreicht.

Bevorzugte Weiterbildungen der Erfindung sind in den Unteransprüchen angegeben.

Nachfolgend wird ein Ausführungsbeispiel der Erfindung anhand der Fig. näher beschrieben. Dabei zeigen:
- Fig. 1: einen Windpark zum Erläutern des erfindungsgemäßen Verfahrens; und
- Fig. 2: einen erfindungsgemäßen Windpark.

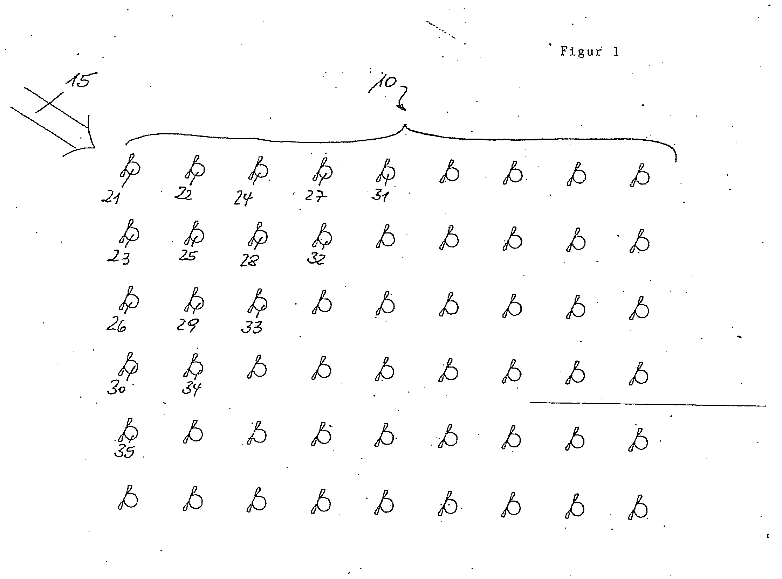

In Fig. 1 ist ein Windpark 10 mit einer Mehrzahl von Windenergieanlagen dargestellt. Einige dieser Windenergieanlagen sind mit Bezugszeichen 21 - 35 gekennzeichnet. Weiterhin ist in dieser Fig. die Windrichtung 15 durch einen Pfeil markiert. Anhand dieser Fig. wird das Anfahren des Windparks entsprechend dem erfindungsgemäßen Verfahren erläutert.

Die am weitesten luvseitig, also in Windrichtung gelegene Windenergieanlage ist die Anlage 21. Diese Anlage kann also dem Wind sicher ein Maximum an Energie entnehmen. Daher wird also zunächst nur diese Windenergieanlage 21 unter Verwendung von aus dem Netz bezogener Leistung für Azimutverstellung, Rotorblattverstellung, Generatorerregung, Anlagensteuerung und Ähnliches angefahren. Die Leistungsaufnahme betrage dabei etwa 5 kW, wobei dieser Wert natürlich auch vom Typ der Anlage abhängig ist.

Wird eine Windgeschwindigkeit von ca. 6m/s zu Grunde gelegt, dann sei beispielhaft eine Leistung von 80 kW angenommen. Da diese Leistung die von der Windenergieanlage abgegebene Leistung ist, ist der Eigenverbrauch bereits berücksichtigt. Daher können mit der von dieser einen Windenergieanlage abgegebenen Leistung weitere 16 Windenergieanlagen angefahren werden, usw. Hier wird sehr deutlich, dass trotz des zeitversetzten Anfahrens der gesamte Windpark recht schnell in Betrieb gehen kann. Daher steht einem relativ geringen Verlust durch das "verspätete" Anfahren von mehreren Windenergieanlagen eine hohe Ersparnis von nicht zu bezahlender Bezugsleistung gegenüber.

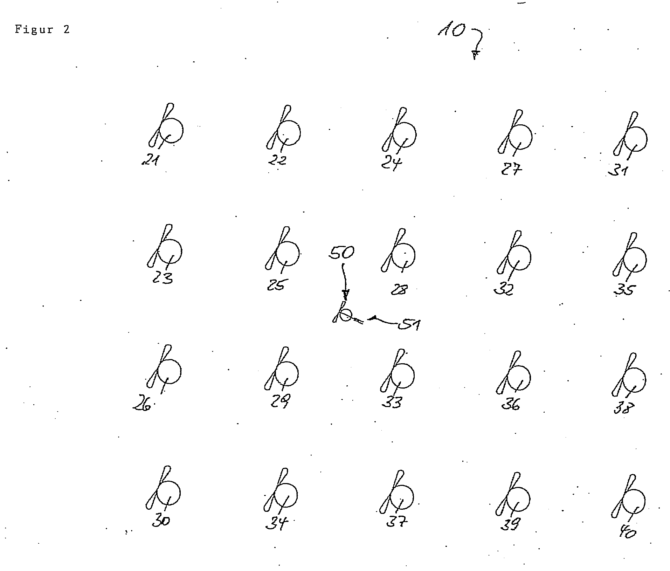

In Fig. 2 ist ebenfalls ein Windpark 10 mit einer Mehrzahl von Windenergieanlagen 28 - 40 dargestellt. Innerhalb dieses Windparks 10 befindet sich weiterhin eine permanent erregte Windenergieanlage mit motorloser Windrichtungsnachführung 50. Die motorlose Windrichtungsnachführung wird dabei durch eine Windfahne 51 veranschaulicht. Diese Windenergieanlage 50 wird also bei aufkommendem Wind durch die Windfahne 51 automatisch in Windrichtung ausgerichtet und beginnt mit der Erzeugung elektrischer Energie, da der Generator permanent erregt ist, also keinen Erregerstrom benötigt.

Da solche permanent erregten Windenergieanlagen im Stand der Technik durchaus bekannt sind, wird auf eine eingehende Beschreibung einer solchen Anlage verzichtet. Für dieses Ausführungsbeispiel wird eine Windenergieanlage vom Typ ENERCON E-12 angenommen, die eine Leistung von 30 kW erzeugen kann und bei der vorstehend angenommenen Windgeschwindigkeit von ca. 6 m/s etwa 6 kW erzeugt, also ausreichende Leistung, um wenigstens eine weitere Windenergieanlage im Windpark anzufahren. Dabei kann für eine als Minimum erforderliche Stromversorgung der Anlagensteuerung eine an sich bekannte, geeignete Notstromversorgung zur Verfügung stehen.

Entsprechend dem obigen Beispiel kann daher also bei einer Leistungsaufnahme zum Anfahren einer Windenergieanlage von etwa 5 kW eine Windenergieanlage 21, angefahren werden. Diese würde dann mit 80 kW ausreichend Leistung bereit stellen, um weitere 16 Windenergieanlagen des Windparks anzufahren. Damit sind dann innerhalb kurzer Zeit 17 von 20 Windenergieanlagen des Windparks 10 in Betrieb. Dabei ist aber keine elektrische Energie aus dem Netz verwendet worden und folglich sind auch dafür keine Kosten entstanden oder der Windpark konnte trotz Netzausfall angefahren werden und kann nun Leistung in das Netz einspeisen.

Da bei einem Netzausfall, einem sogenannten schwarzgefallenen Netz, zunächst Frequenz und Spannung wieder aufgebaut werden müssen, ist natürlich eine Master-Maschine essentiell, die z. B. mit einem selbstgeführten Wechselrichter diese Funktion übernimmt. Die (übrigen) Windenergieanlagen können sich dann auf das Netz synchronisieren und mit dem Einspeisen von Leistung beginnen. Je nach Bedarf kann diese eingespeiste Leistung Blindleistung und/oder Wirkleistung sein.

Soweit bisher beschrieben wurde, wie ein bestimmter Windpark mit einer möglichst geringen Energiezufuhr aus dem Netz angefahren werden kann, so sei nachfolgend auch ein entsprechendes Konzept für eine einzelne Windenergieanlage beschrieben.

Steht eine Windenergieanlage aufgrund eines mangelnden Windangebots oder weil die Anlage z. B. für Servicearbeiten angehalten wurde, still, so bedarf es für das Anfahren dieser Windenergieanlage an elektrischer Energie, wenigstens die Anlagensteuerung mit elektrischer Energie zu versorgen und/oder die Rotorblätter in den optimalen Anstellwinkel zu versetzen (Pitch) und/oder das Maschinenhaus der Windenergieanlage so in den Wind zu stellen, dass der Rotor durch den Wind optimal angetrieben werden kann, usw.

Bei bisherigen Windenergieanlagen wird, wie beschrieben, die für das Anfahren der Windenergieanlage notwendige Energie regelmäßig aus dem Netz bezogen. Diese Energie muss jedoch recht teuer vom Netzbetreiber bezogen werden und der Betreiber der Windenergieanlage muss für diese Bezugsenergie einen deutlich höheren Preis zahlen als er für eine entsprechende Energieeinspeisung vom Betreiber des Netzes zurückbekommt.

Aufgabe der vorliegenden Erfindung ist es daher in Ergänzung zu dem oben Beschriebenen auch den Bedarf von elektrischer Energie aus dem Netz zum Anfahren einer einzelnen Windenergieanlage zu begrenzen, um somit insgesamt die Kosten für den Betrieb der Windenergieanlage zu verringern.

Hierzu wird vorgeschlagen, bei einer Windenergieanlage, die einen Energiespeicher aufweist, in dem elektrische Energie gespeichert ist, zum Anfahren der Windenergieanlage zunächst elektrische Energie aus dem Energiespeicher zu verwenden, um somit den Maschinenträger in die richtige Azimutposition zu verfahren und/oder dem Generator die notwendige Erregerleistung bereitzustellen und/oder die Rotorblätter in einen gewünschten Einstellwinkel zu versetzen und um insbesondere die Anlagensteuerung in Betrieb zu nehmen und dazu mit elektrischer Energie zu versorgen.

Als Energiespeicher kann beispielsweise der elektrische Energiespeicher verwendet werden, welcher ohnehin häufig bei Windenergieanlagen für die Notabschaltung der Windenergieanlagen vorhanden ist, beispielsweise ein elektrischer Energiespeicher für die Bereitstellung der Energie zur Feststellung der Rotorblätter bei einer Notabschaltung. Dabei ist sicherzustellen, dass in dem Energiespeicher eine ausreichende Energiemenge für eine Notabschaltung erhalten bleibt.

Bevorzugt werden beim Anfahren der Windenergieanlage zur Verstellung des Maschinenhauses die Rotorblätter in ihrem Einstellwinkel so eingestellt, dass der Rotor angetrieben wird und dass dann der Generator mit Erregerenergie versorgt wird, so dass die Windenergieanlage in der Lage ist elektrische Energie mit dem Generator zu erzeugen.

Es ist auch möglich, dass die vom Generator erzeugte elektrische Energie allein oder zusammen mit der noch im elektrischen Energiespeicher vorhandenen Energie unter Berücksichtigung der Notabschaltungs-Reserve dazu verwendet wird, den Maschinenträger in die gewünschte Azimutposition zu bewegen.

Bevorzugt wird beim Verfahren des Maschinenträgers, wenn der Rotor sich dabei dreht und die Rotorblätter in eine Position versetzt, die eine Drehung des Rotors nicht oder kaum bremsen.

Da die Kabel am Übergang zwischen Gondel und Turm der Windenergieanlage auch von Zeit zu Zeit entdrillt werden müssen (weil die Gondel sich mehrfach in die gleiche Richtung um die Drehachse gedreht hat) und das Entdrillen regelmäßig durchgeführt wird, wenn die Anlage stillsteht und hierbei dann zum Entdrillen die notwendige Energie zum Entdrillen, d. h. zur Azimutdrehung von 360° und mehr wiederum als Energie aus dem Netz bezogen werden muss, wird auch vorgeschlagen, dass das Entdrillen dann geschieht, wenn die Windgeschwindigkeit größer ist als die Anfahrgeschwindigkeit, bevorzugt aber kleiner ist als die Nenngeschwindigkeit. Unter solchen Bedingungen kann dann die notwendige Energie zum Entdrillen gerade bei einem Windpark von einzelnen Windenergieanlagen aufgebracht werden, die dann ihre Leistung direkt an die Anlage liefern, die entdrillt werden muss, so dass zum Entdrillen keine Energie aus dem Netz bezogen werden muss.

Liegt beispielsweise die Windgeschwindigkeit bei etwa 5m/s, ist ohnehin der Energieertrag nicht sehr groß, er reicht aber regelmäßig aus, um die notwendige Energie zum Drehen des Maschinenhauses aufzubringen.

Bei Windenergieanlagen der Firma Enercon, z. B. Windenergieanlagen vom Typ E-40 oder E-66 sind für die Notabschaltung elektrische Ladungsspeicher pro Rotorblatt vorgesehen, die vom Typ Ultracap (Firma Epcos) sind und mit denen eine relativ große Energiemenge gespeichert werden kann, die regelmäßig ausreicht, um nicht nur eine einmalige Notabschaltung und damit Verstellung der Rotorblätter in Fahnenstellung zu bewirken, sondern auch ausreichend weitere Energie zur Verfügung stellen kann, um hiermit auch Energie für andere Anlagenkomponenten wie z. B. die Anlagensteuerung, Azimutverstellung, o. ä., bereitzustellen.

Wenn die Windenergieanlagen oder der Windpark mit einem separaten Energiespeicher wie z. B. einer Batterie ausgestattet sind, kann auch die Energie aus dieser Batterie dazu verwendet werden, um eine Anlagen anzufahren bzw. die hierfür notwendige Energie am Anfang bereitzustellen.

Es ist auch möglich, eine einzige Windenergieanlage mit einem kleinen Windrad zu versehen, welches beim Anfahren der Windenergieanlage die notwendige Energie ganz oder teilweise, soweit die elektrische Energie durch einen anderen Energiespeicher ausreichend zur Verfügung gestellt werden kann, bereitstellt.

Sollten die anlageneigenen Energiereserven für das Anfahren nicht ausreichen, so werden diese zunächst eingesetzt, so dass erst dann der Bezug von elektrischer Energie aus dem Netz erfolgt und dieser somit insgesamt minimiert wird.

Schließlich kann während des Normalbetriebs der Windenergieanlage die den Energiespeichern entnommene Energie wieder aus den von den Windenergieanlagen selbst erzeugten Energieressourcen zugeführt werden.

Soweit in der vorliegenden Anmeldung noch von einem Energiespeicher die Rede ist, kann dies auch ein eigener Generator innerhalb des Windparks sein, beispielsweise eine Dieselgenerator, also ein Generator mittels dem elektrische Energie bereitgestellt werden kann, die nicht aus dem Netz bezogen werden muss, um eine einzelne oder mehrere Windenergieanlagen zu starten.

Wenn eine Windenergieanlage mit einem kleinen Windrad versehen wird, z. B. ein solches welches eine Leistung von etwa 250 Watt bis 3 kW zur Verfügung stellt (solche Windräder lassen sich praktisch überall z. B. Turm, Gondel usw. an einer Windenergieanlage anbringen) so ist es auch ohne Weiteres möglich, dass die Windenergieanlage dann mit elektrischer Leistung versorgt wird, wenn diese aufgrund verschiedenster Ursachen gar nicht mehr in der Lage ist, aus dem Netz selbst Energie zu beziehen. Da Windenergieanlagen aber häufig stets auf den Bezug von elektrischer Energie angewiesen sind, z. B. zum Betrieb der Gefahrenfeuer (Blitzlicht) und/oder zum Betrieb der regelungs- und steuertechnischen Anlagenkomponenten, kann diese notwendige Energie (auch zum Aufladen des vorhandenen Energiespeichers) auch mit dem kleinen Windrad bereitgestellt werden. Darüber hinaus kann dieses kleine Windrad wie beschrieben auch dazu herangezogen werden, elektrische Energie für das Anfahren der Windenergieanlage ganz oder teilweise zu liefern. Dies kann beispielsweise auch bei Verstellung der Rotorblätter auch dadurch geschehen, indem nicht alle Rotorblätter gleichzeitig verstellt werden, sondern zunächst nur ein einziges Rotorblatt, so dass die Anlage selbst bereits bei ausreichendem Wind dann anfängt sich zu drehen, so dass die dann erzeugte Energie der Windenergieanlage selbst auch dann weiter ausreicht die anderen Rotorblätter auf den gewünschten Einstellwinkel zu verstellen.

Ein weiterer erfindungsgemäßer Aspekt besteht darin, dass nicht nur die von einer einzelnen Windenergieanlage erzeugte Energie dazu verwendet wird eine andere oder mehrere Windenergieanlagen in Gang zu setzen, beispielsweise Energie bereitzustellen, damit der richtige Azimutwinkel eingenommen werden kann, sondern wenn eine Flaute einsetzt, also bei geringer Windgeschwindigkeit, die bis auf 0 absinken kann, und nach und nach Windenergieanlagen eines Windparks abgeschaltet werden, so erfolgt dies gemäß der Erfindung auch so, dass dann die Windenergieanlagen eines Windparks in verschiedene Richtungen ausgerichtet sind. Dies kann einerseits dadurch erfolgen, dass eine Steuerung in der Anlage vorgesehen wird, damit kurz vor endgültiger Abschaltung eine Anlage sich in eine vorgegebene bzw. vorgebbare Richtung dreht oder dass durch solche Anlagen, die sich noch drehen und damit eine geringe elektrische Energie erzeugen, diese elektrische Energie dazu verwendet wird, den Azimutantrieb anderer Anlagen anzutreiben, so dass diese Anlagen eine Ausrichtung haben, die sich von anderen unterscheidet.

Setzt die Flaute sich fort und kommt es zum Windstillstand oder zu so geringen Windgeschwindigkeiten, dass alle Anlagen keinerlei elektrische Energie mehr produzieren, so haben die verschiedenen Anlagen oder verschiedene Gruppen von Anlagen eine unterschiedliche Ausrichtung zum Wind.

Setzt nunmehr wieder verstärkter Wind ein, der mit einer Geschwindigkeit bläst, die oberhalb der Einschaltgeschwindigkeit liegt, so sind dann schon einige Anlagen zum Wind im Wesentlichen richtig ausgerichtet und können gleich mit der Produktion beginnen, ohne dass es noch unbedingt der Azimutverstellung solcher Anlagen bedarf. Diese Anlagen können nunmehr bevorzugt Energie produzieren, die dazu verwendet wird, zunächst einmal den Azimut anderer Anlagen richtig - in Windrichtung - zu verstellen.

Selbstverständlich ist es möglich, dass nicht nur jede einzelne Anlage eine andere Richtung einnimmt, sondern dies kann auch gruppenweise geschaltet werden, so dass eine Anzahl bestimmter Anlagen in nahezu gleiche Richtungen gerichtet werden, wenn bei einer Flaute die Windgeschwindigkeit unter die Einschaltgeschwindigkeit sinkt.

In jedem Fall ist die vorbeschriebene Ausführung mit der unterschiedlichen Windrichtungsausrichtung verschiedenster Anlagen bei Einsetzen einer Flaute vorteilhaft, weil damit sichergestellt wird, dass bei einsetzendem Wind wenigstens eine Windenergieanlage des Windparks in Betrieb genommen werden kann, ohne dass es einer bedeutenden Azimutverstellung bedarf.

Eine Variante der vorbeschriebenen Ausführung besteht darin, dass diejenigen Windenergieanlagen, die sich bei Einsetzen einer Flaute zuerst abschalten, eine Azimutausrichtung annehmen, die möglichst diametral zur aktuellen Windrichtung ist, so dass bei weiter fortsetzender Flaute die Windenergieanlagen, die sich zuletzt abstellen, in der Richtung verbleiben, aus der zuletzt der Wind blies.

Eine weitere Variante besteht darin, dass es bestimmte Vorzugsrichtungen gibt, in die die Anlagen bei Einsetzen einer Flaute ausgerichtet werden. Diese Vorzugsrichtung kann beispielsweise in der Hauptwindrichtung bestehen, so dass dann bei Einsetzen des Windes, also der Beendigung der Flaute eine relativ hohe Wahrscheinlichkeit besteht, dass der Wind aus der Hauptwindrichtung kommt und somit eine sehr große Anzahl von Windenergieanlagen nicht mehr hinsichtlich des Azimuts völlig neu verstellt werden muss.

Für die unterschiedliche Azimutausrichtung der Windenergieanlagen bei Einsetzen einer Flaute ist gemäß der Erfindung und Anspruch 1 ein Windparkmanagement bzw. ein entsprechender Rechner zuständig, der ein entsprechendes Programm enthält, welches dafür sorgt, dass die verschiedensten Anlagen je nach vorherrschender Windrichtung eine unterschiedliche Azimutausrichtung einnehmen. Dies kann so geschehen, dass nicht jedwede Azimutausrichtung eingestellt wird, sondern bestimmte Vorzugsrichtungen, z.B. die vier Haupthimmelsrichtungen Nord, Ost, Süd, West. So können beispielsweise die westlichen Anlagen eines Windparks nach Westen ausgerichtet sein, die nördlichen Anlagen eines Windparks nördlich, die östlichen Anlagen eines Windparks östlich und die südlichen Anlagen eines Windparks südlich. Selbstverständlich sind Zwischenformen zwischen Windrichtungsausrichtungen wie Nord-West, Süd-West usw. ebenfalls möglich.

Mithin besteht eine nahezu 100%ige Wahrscheinlichkeit dafür, dass bei Wiedereinsetzen des Windes auf eine Windgeschwindigkeit oberhalb der Einschaltgeschwindigkeit bestimmte Anlagen direkt dem Wind ausgesetzt sind und nicht im Windschatten irgendeiner anderen Anlage stehen. Damit wird das Wiedereinschalten aller anderen Anlagen ebenfalls beschleunigt.

Für die Azimutverstellung braucht nicht nur der Azimutantrieb eingesetzt werden, sondern dies kann auch dadurch erfolgen, indem einzelne Rotorblätter einer Anlage asynchron zu den anderen verstellt werden. Wenn beispielsweise 2 von 3 Rotorblättern sich in Fahnenstellung befinden und ein Rotorblatt der Windbreite nach maximal ausgerichtet ist, so kann auch durch geschickte Verstellung dieses Rotorblattes, je nachdem wo sich dieses gerade befindet, z.B. 9.00-Uhr- oder 3.00-Uhr-Stellung, der Azimut eingestellt werden, ohne dass es hierzu eines Betriebs der Azimutantriebe bedarf oder diese unterstützen eine entsprechende Azimutverstellung, so dass für die Verstellung nicht die maximale elektrische Energie notwendig ist.

## Patentansprüche

1. Schwarzstartfähiger Windpark mit einem Windparkmanagement bzw. einem entsprechenden Rechner und mehreren Windenergieanlagen, die eine Anlagensteuerung zum Steuern der jeweiligen Windenergieanlage, einer Azimutposition-veränderlichen Maschinenträger, Rotorblätter und einen Generator aufweisen,
wobei das Windparkmanagement bzw. der entsprechende Rechner ein entsprechendes Programm enthält, welches dafür sorgt,
dass beim Einsetzen einer Flaute die Windenergieanlagen in verschiedene Himmelsrichtungen ausgerichtet werden und
wobei der Windpark so konfiguriert ist, dass die elektrische Energie, die eine Windenergieanlage des Windparks erzeugt, zum Anfahren weiterer Windenergieanlagen des Windparks verwendet wird.

## Claims

1. Self-contained startable wind farm with a wind farm management system or a corresponding computer and several wind turbines which have a turbine control system for controlling the respective wind turbine, an azimuth position-changing machine carrier, rotor blades and a generator,
wherein the wind farm management system or the corresponding computer contains an appropriate program that ensures
that when a calm sets in, the wind turbines are aligned in different directions and
wherein the wind farm is configured in such a way that the electrical energy generated by a wind turbine in the wind farm is used to start up further wind turbines in the wind farm.

## Revendications

1. Parc d'éoliennes avec capacité de redémarrage à froid avec une gestion de parc d'éoliennes ou un ordinateur correspondant et plusieurs éoliennes qui présentent un dispositif de commande d'installations pour la commande des éoliennes respectives, un support de machine variable selon une position azimutale, des pales de rotor et un générateur,
dans lequel la gestion du parc d'éoliennes ou l'ordinateur correspondant contient un programme correspondant, assurant que
lors de l'installation d'une période d'accalmie, les éoliennes sont orientées dans différents points cardinaux et
dans lequel le parc d'éoliennes est configuré de telle sorte que l'énergie électrique que génère une éolienne du parc d'éoliennes est utilisée pour démarrer d'autres éoliennes du parc d'éoliennes.
